(19) Europäisches Patentamt

European Patent Office

Office européen des brevets

(11) **EP 3 116 647 B1**

(12) **EUROPEAN PATENT SPECIFICATION**

(45) Date of publication and mention of the grant of the patent:
**03.10.2018 Bulletin 2018/40**

(51) Int Cl.:
*B01J 37/03* $^{(2006.01)}$
*B01J 37/02* $^{(2006.01)}$
*B01J 23/883* $^{(2006.01)}$
*B01J 31/02* $^{(2006.01)}$
*C10G 45/06* $^{(2006.01)}$
*B01J 21/12* $^{(2006.01)}$
*B01J 32/00* $^{(2006.01)}$
*B01J 35/10* $^{(2006.01)}$
*B01J 23/882* $^{(2006.01)}$
*C10G 45/08* $^{(2006.01)}$
*B01J 27/19* $^{(2006.01)}$
*B01J 21/14* $^{(2006.01)}$
*B01J 23/00* $^{(2006.01)}$

(21) Application number: **15710931.5**

(22) Date of filing: **27.02.2015**

(86) International application number:
**PCT/JP2015/001018**

(87) International publication number:
**WO 2015/136873 (17.09.2015 Gazette 2015/37)**

(54) **HYDROTREATING CATALYST, METHOD FOR PRODUCING THE CATALYST, AND HYDROTREATING PROCESS FOR HYDROCARBON OIL USING THE CATALYST**

HYDROTREATING-KATALYSATOR, VERFAHREN ZUR HERSTELLUNG DES KATALYSATORS UND HYDROTREATING-VERFAHREN FÜR WASSERSTOFFÖL UNTER VERWENDUNG DES KATALYSATORS

CATALYSEUR D'HYDROTRAITEMENT, PROCÉDÉ DE PRODUCTION DU CATALYSEUR, ET PROCÉDÉ D'HYDROTRAITEMENT POUR HUILE HYDROCARBURE UTILISANT LE CATALYSEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.03.2014 JP 2014046245**

(43) Date of publication of application:
**18.01.2017 Bulletin 2017/03**

(73) Proprietor: **Nippon Ketjen Co., Ltd**
**Minato-ku**
**Tokyo 105-6791 (JP)**

(72) Inventors:
• **NONAKA, Kenji**
  **Niihama-shi**
  **Ehime 792-0002 (JP)**
• **KANAI, Yuuki**
  **Niihama-shi**
  **Ehime 792-0002 (JP)**
• **TOYOSHI, Yasuo**
  **Niihama-shi**
  **Ehime 792-0002 (JP)**
• **NISHIMORI, Youhei**
  **Niihama-shi**
  **Ehime 792-0002 (JP)**
• **KOBAYASHI, Toyokazu**
  **Niihama-shi**
  **Ehime 792-0002 (JP)**

(74) Representative: **Schwabe - Sandmair - Marx**
**Patentanwälte Rechtsanwalt**
**Partnerschaft mbB**
**Joseph-Wild-Straße 20**
**81829 München (DE)**

(56) References cited:
**WO-A1-2011/036862      WO-A2-2011/023668**
**JP-A- 2000 005 601      JP-A- 2001 310 133**
**US-A- 5 468 709          US-A1- 2008 087 577**
**US-A1- 2011 000 824**

## Description

### Technical Field

The present invention relates to a hydrotreating catalyst that removes impurities such as sulfur and nitrogen in hydrocarbon oils, to a method for producing the catalyst, and to a method for its use.

### Background Art

With recent trends toward improving the earth's air environment, there has been a strong demand for even higher performance of hydrotreating catalysts to be used in hydrorefining of distilled oils that are to serve primarily as fuels. Common hydrotreating catalysts for hydrocarbon oils are inorganic heat-resistant supports such as alumina or silica having molybdenum and a hydrogenation-active metal component such as cobalt or nickel supported on it by firing. In recent years, however, various modifications have been made such as altering the support or changing the method of supporting the catalyst metal, in order to achieve further increased catalyst performance.

PTL 1 discloses a hydrotreating catalyst comprising an active ingredient selected from among elements of Groups 6B and 8 of the Periodic Table supported on an alkaline earth metal oxide-silica-alumina support with an alkaline earth metal oxide of 0.1 to 10 wt%. However, because the area-to-weight ratio of this catalyst is high at 200 $m^2$/g or greater, the mean pore diameter is narrow and diffusion in the catalyst pores of the hydrocarbon molecules is inadequate, and therefore it cannot be satisfactorily applied to desulfurization of distilled oils in a wide boiling point range.

In PTL 2 there is disclosed, as a catalyst for ultra-deep desulfurization of hydrocarbon oils, a catalyst having a Group VIB metal, Group VIII metal, phosphorus and an organic additive present on a conventional oxide support. However, scant specific information exists in regard to optimizing modification of the support and the properties of the catalyst, and it is difficult to develop a catalyst with optimized desulfurization and denitrification activity based on PTL 2.

PTL 3 discloses a hydrodesulfurization/denitrification catalyst having a metal of Group VIa of Periodic Table, a metal of Group VIII and a dihydric alcohol supported on an oxide support containing silica, magnesia and alumina. However, the magnesia content of this catalyst is very high at 12 to 35 wt% of the support (calculated value), and therefore it has a drawback in that it is difficult to control the pore properties and acidity of a support which has a silica or alumina base.

PTL 4 relates to a hydrotreating catalyst for a carbon source raw material, comprising at least one type of metal and a modifying agent in an amorphous silica-alumina catalyst support. Examples given of applicable catalyst supports include silica-alumina-zirconia, silica-alumina-thorium oxide, silica-alumina-titanium oxide and silica-alumina-magnesium oxide, but nothing is concretely disclosed regarding the method of production for and the composition of such a ternary support.

### Citation List

### Patent Literature

[PTL 1] JP 2000-5601 A
[PTL 2] JP 2000-313890 A
[PTL 3] JP 2001-310133 A
[PTL 4] JP 2012-532212 A

### Summary of Invention

### Technical Problem

It is an object of the present invention to provide a catalyst having hydrotreating (hydrogenation, desulfurization and denitrification) performance that is equal to or superior to the prior art, as a hydrotreating catalyst for hydrocarbon oils, and a hydrotreating process for hydrocarbon oils using the catalyst.

### Solution to Problem

The present inventors have conducted much diligent research in light of the aforementioned problems of the prior art, with particular focus on efficient modification of the pore surface of the catalyst support and optimization of the pore structure, and as a result we have completed this invention upon finding that a catalyst obtained by supporting a hydrogenation-active component and an organic additive on a silica-alumina support comprising a specific amount of a metal of Group 2 of the Periodic Table is highly effective for hydrotreating of hydrocarbon oils.

Specifically, the invention is a hydrotreating catalyst for hydrocarbon oils having at least one metal selected from among metals of Group 6 of the Periodic Table, at least one metal selected from among metals of Groups 8 to 10 of the Periodic Table, and an organic additive, supported on an inorganic porous carrier comprising at least one metal selected from among metals of Group 2 of the Periodic Table, in addition to alumina and silica.

In the hydrotreating catalyst of the invention, the content of at least one metal selected from among metals of Group 2 of the Periodic Table is 0.3 to 2 mass% of the oxide catalysts, and the silica content is 5 to 10 mass% of the oxide catalysts. Also, the mean pore diameter is 10 to 20 nm, the area-to-weight ratio is 100 to 160 $m^2$/g, and the total pore volume is 0.3 to 0.6 ml/g.

The method for producing a hydrotreating catalyst for hydrocarbon oils according to the invention comprises impregnating an inorganic porous carrier obtained by calcining a hydrate containing at least one metal selected from among metals of Group 2 of the Periodic Table, in addition to alumina and silica, at 730 degrees C to 860 degrees C, with an impregnating solution containing at least one metal selected from among metals of Group 6 of the Periodic Table, at least one metal selected from among metals of Groups 8 to 10 of the Periodic Table and an organic additive, and drying under conditions such that the organic additive remains on the catalyst at a weight reduction proportion of 3 to 60 mass%.

The hydrotreating process for a hydrocarbon oil according to the invention comprises contacting a hydrotreating catalyst of the invention with a hydrocarbon oil under conditions with a reaction temperature of 300 degrees C to 450 degrees C, a hydrogen partial pressure of 1-20 MPa, a liquid hourly space velocity of 0.1-10 $hr^{-1}$ and a hydrogen/oil ratio of 50 to 1,200 $Nm^3$/kl.

**Advantageous Effect of Invention**

By using a hydrotreating catalyst of the invention it is possible to efficiently remove the impurities such as sulfur and nitrogen from hydrocarbon oils and thereby upgrade the hydrocarbon oils, to a greater degree than with conventional catalysts.

**Description of the Embodiments**

(1) Support

The invention will now be explained in detail. The support to be used for the catalyst of the invention comprises a specified amount of an oxide of a metal of Group 2 of the Periodic Table, with silica-alumina as the substrate. The silica starting material used may be any of various types of silicon compounds such as alkali metal silicates, alkoxysilanes, silicon tetrachloride, orthosilicates, silicone, silica sol, silica gel and the like. As the alumina starting material there may be used aluminum hydroxides (bayerite, gibbsite, diaspore, boehmite, pseudoboehmite and the like), chlorides, nitrates, sulfates, alkoxides, alkali aluminate metal salts and other inorganic salts, organic salts or alumina sol. Starting materials for the oxide of the metal of Group 2 of the Periodic Table include oxides, chlorides, hydroxides, hydrides, nitrates, carbonates, sulfates and organic acid salts. Magnesium, calcium, strontium and barium may be used as elements of Group 2 of the Periodic Table, with magnesium and calcium being preferred, and magnesium being especially preferred from the viewpoint of activity.

The silica-alumina-Group 2 metal oxide support is obtained by calcinig a silica-alumina hydrate containing a Group 2 metal, prepared by a coprecipitation method or kneading method. The hydrate may be prepared by any of various methods, such as coprecipitation of the silica and alumina starting materials and the Group 2 metal compound, kneading of an alumina hydrate, silicon compound and Group 2 metal compound, mixing of an alumina-Group 2 metal hydrate and a silicon compound, or mixing of a silicon compound-Group 2 metal and kneading of an alumina hydrate. The silica component after loading of the hydrogenation-active metal and an organic additive on the silica-alumina-Group 2 metal oxide support to produce a catalyst, is 3 to 12 mass%, preferably 5 to 10 mass% and more preferably 6 to 9 mass% of the oxide catalysts.
On the other hand, the oxide of the metal of Group 2 of the Periodic Table is 0.3 to 2 mass%, preferably 0.4 to 1.8 mass% and more preferably 0.5 to 1.5 mass% of the oxide catalysts.

The silica-alumina hydrate containing the metal of Group 2 of the Periodic Table is subjected to peptization procedure with addition of an aqueous solution of hydrochloric acid, sulfuric acid, nitric acid an organic acid (formic acid, acetic acid, propionic acid, oxalic acid, malonic acid, malic acid, tartaric acid, citric acid, gluconic acid or the like), ammonia or sodium hydroxide to control the pore structure as necessary, kneaded to improve the moldability, and then molded to the desired shape (pellets, spheres, an extruded body or the like). The molded article will usually be calcined in air at a temperature of 730 degrees C to 860 degrees C (not the atmospheric temperature but rather the temperature of the molded article), preferably 740 degrees C to 850 degrees C and more preferably 750 degrees C to 840 degrees C, for 0.1 to 3 hours and preferably 0.5 to 2 hours, to produce a support.

The hydrogenation-active component and organic additive are added to the support obtained by the steps described above, and drying treatment is carried out to load them on the support. The method of addition is not particularly restricted, and for example, various industrial methods such as impregnation, coating or spraying may be applied, although impregnation methods are preferred from the viewpoint of manageability and addition efficiency. The impregnation methods of adsorption, equilibrium adsorption, pore filling, incipient wetness, evaporation to dryness and spraying may all be applied according to the invention, but pore filling is preferred from the viewpoint of manageability. There are no particular restrictions on the order of adding the hydrogenation-active component and the organic additive, and they may be added in succession or simultaneously. For an impregnation method, a solution of each of the components dissolved in different polar organic solvents, water or water-polar organic solvent mixtures may be used, although the most preferred solvent is water.

(2) Loaded components

At least one element selected from among chromium, molybdenum and tungsten may be the element of Group 6 of the Periodic Table among the hydrogenation-active components to be loaded. These elements may be used alone, in which case molybdenum and tungsten, and especially molybdenum, are preferred from the viewpoint of economy and activity. They may also be used in combination, depending on the reactivity of the feedstock and the operating conditions of the reactor. When a combination is to be employed, examples include chromium-molybdenum, chromium-tungsten, molybdenum-tungsten and chromium-molybdenum-tungsten.

The loading weight is 10 to 40 mass%, preferably 15 to 35 mass% and even more preferably 20 to 30 mass% of the oxide catalysts, as the total oxides of Group 6 elements of the Periodic Table. At less than 10 mass% the catalytic activity is low, while there is no commensurate increase in activity at greater than 40 mass%. The starting material for the element of Group 6 of the Periodic Table may be a chromate, molybdate, tungstate, trioxide, halide, heteropolyacid, heteropolyacid salt, or the like.

The element of Groups 8 to 10 of the Periodic Table in the hydrogenation-active component may be iron, cobalt or nickel. These elements may be used each alone, with cobalt and nickel being preferred from the viewpoint of economy and activity. They may also be used in combination, depending on the reactivity of the feedstock and the operating conditions of the reactor. Examples of combinations include iron-cobalt, iron-nickel, cobalt-nickel and iron-cobalt-nickel.

The loading weight is 0.5 to 15 mass%, preferably 1 to 10 mass% and even more preferably 2 to 6 mass% of the oxide catalysts, as the total oxides of Group 8-10 elements of the Periodic Table. The catalytic activity is insufficient with a loading weight of less than 0.5 mass%, while there is no increase in activity at greater than 15 mass%. The iron, cobalt and nickel compounds used for loading may be oxides, hydroxides, halides, sulfates, nitrates, carbonates, organic acid salts or the like. When an impregnating solution of the hydrogenation-active component is to be prepared, the element of Group 6 of the Periodic Table and element of Groups 8 to 10 of the Periodic Table may be prepared each separately, or both may be mixed as a homogeneous solution.

In order to adjust the pH of the solution and increase the solution stability and catalyst hydrogenation activity, ammonia water, hydrogen peroxide water, nitric acid, sulfuric acid, hydrochloric acid, phosphoric acid, hydrofluoric acid or the like may be added to the impregnating solution of the hydrogenation-active component, as necessary. Phosphoric acid may be added as a catalyst component, in which case the range of addition is 0.5 to 15 mass%, preferably 1 to 10 mass% and even more preferably 2 to 8 mass% of the oxide catalysts, as phosphorus oxides. Phosphoric acids that may be added include orthophosphoric acid, pyrophosphoric acid, metaphosphoric acid, phosphonic acid, diphosphonic acid, phosphinic acid and polyphosphoric acid, as well as their organic salts and inorganic salts. All or part of the phosphoric acid amount may also be added during the process of preparing the silica-alumina-Group 2 metal oxide support, instead of being added to the impregnating solution of the hydrogenation-active component.

The organic additive is a water-soluble organic compound as mentioned below, and it is selected from among polyhydric alcohols and their ethers, esters of polyhydric alcohols or ethers, saccharides, carboxylic acids and their salts, amino acids and their salts, and various chelating agents.

Examples of polyhydric alcohols and their ethers include polyhydric alcohols such as ethylene glycol, diethylene glycol, triethylene glycol, propylene glycol, isopropylene glycol, dipropylene glycol, tripropylene glycol, butanediols (1,2-, 1,3-, 1,4-, 2,3-), pen-tanediols (for example, 1,5-, including other isomers), 3-methyl-1,5-pentanediol, neopentyl glycol, hexanediol (for example, 1,2- and 1,6-, including other isomers), hexylene glycol, polyvinyl alcohol, polyethylene glycol (average molecular weight: 200-600), polypropylene glycol (only water-soluble), glycerin, trimethylolethane, trimethylolpropane, hexanetriol (for example, 1,2,6-, including other isomers), erythritol and pentaerythritol, as well as their ethers (monoethers, diethers and triethers selected from among methyl, ethyl, propyl, isopropyl, butyl, isobutyl, secondary butyl and tertiary butyl ethers, and their combinations, that are water-soluble).

Examples of esters of polyhydric alcohols or ethers include esters of the aforementioned polyhydric alcohols or ethers (monoesters, diesters and triesters with formic acid, acetic acid and the like, that are water-soluble).

Examples of saccharides include saccharides such as glucose, fructose, isomerized sugars, galactose, maltose, lactose, sucrose, trehalose, starch, dextrin, pectin, glycogen, curdlan and the like.

Examples of carboxylic acids and their salts include carboxylic acids such as formic acid, acetic acid, propionic acid, oxalic acid, malonic acid, succinic acid, maleic acid, fumaric acid, tartaric acid, citric acid (anhydride, monohydrate), malic acid, gluconic acid and glutaric acid, and salts thereof.

Examples of amino acids and their salts include amino acids such as aspartic acid, alanine, arginine, glycine and glutamic acid, and salts thereof.

Examples of different chelating agents include various chelating agents such as ethylenediamine (EDA), diethylenetriamine (DETA), triethylenetetramine (TETA), tetraethylenepentamine (TEPA), pentaethylenehexamine (PEHA), ethylenediaminetetraacetic acid (EDTA), hydroxyethylethylenediaminetriacetic acid (HEDTA), diethylenetriaminepentaacetic acid (DTPA), triethyltetraminehexaacetic acid (TTHA), hydroxyethyliminodiacetic acid (HIDA), 1,3-propanediaminetetraacetic acid (PDTA), 1,3-diamino-2-hydroxypropanetetraacetic acid (PDTA-OH), trans-1,2-cyclohexanediaminetetraacetic acid (CyDTA), glycol etherdiaminotetraacetic acid (GEDTA), nitrilotriacetic acid (NTA), dihydroxyethylglycine (DHEG) and (S,S)-ethylenediamine-N,N'-disuccinic acid (EDDS).
The organic additives may be used alone or in appropriate combinations.

The amount of organic additives to be added is 0.05 to 3 times, preferably 0.08 to 2.8 times and most preferably 0.1 to 2.5 times the total number of moles of the element of Group 6 of the Periodic Table and the element of Groups 8 to 10 of the Periodic Table. At less than a 0.03-fold molar amount, no catalyst performance-improving effect will be seen. Also, no further increase in activity is obtained with a greater than 3-fold molar amount.

In relation to addition of the hydrogenation-active component, there are no restrictions on the order of adding the hydrogenation-active component and the organic additive. That is, it maybe added as a separate solution either before or after addition of the hydrogenation-active component, or it may be added simultaneously as a homogeneous solution with the hydrogenation-active component. Also, the hydrogenation-active component solution, organic additive solution or their homogeneous solution may be added at once or separated into several additions, depending on the viscosity of the solution and the pore volume (water absorption volume) of the support.

After addition of the hydrogenation-active component and organic additive has been finished, the drying treatment described below may be carried out to obtain the complete catalyst having an element of Group 6 of the Periodic Table, an element of Groups 8 to 10 of the Periodic Table and an organic additive supported on a support. By completing loading of the components at the drying treatment, without firing, it is possible to obtain a catalyst having more excellent activity than a conventional fired catalyst.

In the drying treatment, preferably the organic additive does not change the basic backbone structure (without considering addition or dissociation of water of hydration, hydrogen ions, hydroxide ions, ammonium ions or the like), and at least a portion thereof participates in interaction with the hydrogenation-active component (by intermolecular forces, hydrogen bonding, covalent bonding, ionic bonding, coordination bonding or the like) and remains.

As a general rule for the proportion of remaining organic additives, the weight reduction proportion is preferably in the range of 3 to 60 mass%, more preferably 4 to 55 mass% and most preferably 5 to 50 mass%, when the complete catalyst has been heated in air at 550 degrees C for 1 hour. If the weight reduction proportion is not at least 3 mass%, volatilization or decomposition of the supported organic additive will occur and interaction with the hydrogenation-active metal component will be insufficient, such that no increase in catalytic activity will be seen. If it exceeds 60 mass%, the organic additive will flow out with the large amount of water produced during the pre-sulfurization step, such that no increase in catalytic activity can be expected.

There are no particular restrictions on the drying method so long as it can maintain the interaction between the organic additive and the hydrogenation-active component. For example, various industrial methods may be applied, such as convection heat drying in air or an inert gas (hot air drying), radiant heat drying (infrared or far-infrared drying), conductive heat drying, microwave drying, freeze-drying, reduced pressure drying, and the like. There are also no particular restrictions on the drying conditions, which may be appropriately set depending on the volatilization and decomposition conditions of the organic additive. Hot air drying is the most convenient drying method, in which case the conditions may be in air or an inert gas (nitrogen gas, rare gas, carbon dioxide gas, low-oxygen atmosphere or the like), with a temperature and drying period such that the basic backbone of the organic additive is not altered, such as 30 degrees C to 250 degrees C (not the atmosphere temperature but rather the material temperature of the dried product), preferably 50 degrees C to 220 degrees C and more preferably 80 degrees C to 200 degrees C, for 0.1 to 3 hours. The material temperature at the production stage of the catalyst of the invention is measured with a thermocouple, for example, by any method used by those skilled in the art.

(3) Properties of completed catalyst

In order for the completed catalyst to exhibit satisfactory catalyst performance, it preferably has the following physical properties and pore structure. Specifically, the mean pore diameter is 9 to 20 nm, preferably 10 to 18 nm and more preferably 11 to 16 nm. If the mean pore diameter is less than 9 nm, diffusion of the hydrocarbon oil in the pores will be insufficient, and if it exceeds 20 nm the specific surface area will be reduced, thereby lowering the catalyst performance.

Also, the total pore volume is preferably 0.3 to 0.6 ml/g and more preferably 0.4 to 0.5 ml/g. At 0.3 ml/g or less, diffusion of the hydrocarbon oil in the pores will be insufficient, and at greater than 0.6 ml/g, the absolute mass of the catalyst will be lighter (the catalytic active components will be reduced) when the catalyst has been filled into the reactor, thereby resulting in inadequate catalyst performance.

The standard for homogeneity of the catalyst pores is that the pore structure is preferably such that proportion of the volume of pores with diameters in the range of plus or minus 1.5 nm of the mean pore diameter is 20% to 60% and preferably 22% to 58% of the total pore volume. If it is less than 20%, there will be an increased proportion of fine pores that do not participate in the reaction, and also large pores with low surface area, while if it is greater than 60%, this will inhibit diffusion in the pores of the hydrocarbon oil that has a relatively large molecular size, potentially lowering the catalytic activity. The pore size distribution of the catalyst of the invention is the monomodal distribution centered around the mean pore diameter and its vicinity. The specific surface area is preferably 100 to 170 $m^2/g$, the range being more preferably 110 to 160 $m^2/g$ and even more preferably 115 to 150 $m^2/g$. At less than 100 $m^2/g$ the catalyst performance will be inadequate, and at greater than 170 $m^2/g$ the mean pore diameter will be too small, thereby tending to result in plugging of the pores during the reaction.

The pore structure (pore volume, mean pore diameter, pore size distribution, etc.) is the value obtained by mercury porosimetry (contact angle: 140 degrees, surface tension: 480 dyn/cm), and the specific surface area is the value obtained by the BET method. For measurement of the pore structure and specific surface area of the complete catalyst and determination of the loading weight of the hydrogenation-active component, the complete catalyst is used after treatment in air at 450 degrees C for 1 hour to remove the water and organic materials, and the analysis and measurement values obtained here are based on the oxide catalysts. A fluorescent X-ray analyzer was used for quantitation of the hydrogenation-active components and the constituent components of the support.

The catalyst is used after a pre-sulfurization procedure, and the pre-sulfurization procedure may be conducted either inside or outside the reactor. The pre-sulfurization method employed may be sulfidizing with a liquid phase using a kerosene or gas oil fraction containing sulfur in a heated state under a hydrogen atmosphere, or using an appropriate amount of a sulfidizing agent such as carbon disulfide, butanethiol, dimethyl disulfide (DMDS) or ditertiary nonylpolysulfide (TNPS) added to such an oil, or a gas phase sulfurization method using hydrogen sulfide or carbon disulfide as the sulfidizing agent in a heated hydrogen stream.

(4) Hydrocarbon oil

The hydrocarbon oil for hydrotreating by a catalyst of the invention is a distilled oil with a 90% boiling point temperature of no higher than 560 degrees C and preferably no higher than 540 degrees C and an initial boiling point of 100 degrees C or higher and preferably 150 degrees C or higher, based on extension of the procedure of ASTM D-2887 or D-2887.

Specific examples include mainly petroleum-based naphtha, straight-run kerosene, straight-run gas oil, heavy gas oil, vacuum gas oil and heavy vacuum gas oil, but also included are kerosene and gas oil fractions (light cycle oil or coker gas oil) obtained from hydrocrackers, thermal crackers or fluidized catalytic crackers and kerosene and gas oil fractions from heavy oil direct desulfurizers, as well as kerosene and gas oil-corresponding fractions from coal or from animal and vegetable biomass and any blended oils comprising the aforementioned fractions.

The metal content for vanadium or nickel in the feedstock to be treated is no greater than 5 ppm by weight and preferably no greater than 1 ppm by weight and the carbon residue content is no greater than 1 mass% and preferably no greater than 0.9 mass%, but the distilled oil may also be mixed with heavy oil such as vacuum gas oil, atmospheric residue, vacuum residual oil, solvent extracted oil, coal liquefied oil, shale oil or tar sand oil, and treated so that the metal and 1 carbon residue contents mentioned above are satisfied.

(5) Hydrotreating process

The hydrotreating catalyst of the invention may be used in various hydrotreatment reactions in which the aforementioned hydrocarbon oils are subjected to hydrogenation, hydrodesulfurization, hydrodenitrification, hydrodeoxygenation, hydrocracking, hydroisomerization or the like in the presence of hydrogen, in a reactor such as a fixed bed, ebullating bed or moving bed. A more preferred use for the hydrotreating catalyst of the invention is desulfurization or denitrification of a petroleum-based distilled oil, and especially reduction of the sulfur content in a kerosene or gas oil fraction to no greater than 80 ppm by weight and more preferably no greater than 10 ppm by weight.

For use in a hydrotreating apparatus, the reaction conditions will depend on the type of feedstock but will generally be a hydrogen partial pressure of 1 to 20 MPa and preferably 3 to 18 MPa, a hydrogen/oil ratio of 50 to 1,200 $Nm^3$/kl and preferably 100 to 1,000 $Nm^3$/kl, a liquid hourly space velocity of 0.1 to 10 $h^{-1}$ and preferably 0.5 to 8 $h^{-1}$, and a reaction temperature of 300 degrees C to 450 degrees C and preferably 320 degrees C to 430 degrees C.

**Examples**

The invention will now be explained in greater detail by the following examples. However, the invention is not limited to the examples in any way.

(Catalyst preparation)

**Example 1**

Aluminum sulfate, sodium aluminate and water glass were added to a tank containing warm tap water and mixed to prepare a silica-alumina hydrate gel (silica/alumina weight ratio: 8.5/91.5). The hydrate was separated from the solution and warm water was used for cleaning removal of the impurities, after which nitric acid was added, and then magnesium carbonate (0.5 mass% magnesium oxide based on oxide catalyst) was added and a kneader was used for hot kneading to adjust the water content, following which the mixture was subjected to extrusion molding and calcined in air at 780 degrees C for 1.5 hours to obtain a silica-alumina-magnesia support. The support was impregnated with an aqueous solution containing molybdenum trioxide, basic cobalt carbonate and phosphoric acid to 22 mass% of molybdenum trioxide, 4 mass% of cobalt oxide and 3 mass% of phosphorus oxide based on the oxide catalyst, with citric acid monohydrate and polyethylene glycol (average molecular weight: 200) as organic additives (the organic additives being added at 0.1 mol and 0.3 mol of citric acid monohydrate and polyethylene glycol, respectively, to the total number of moles of molybdenum and cobalt), and hot air drying treatment was carried out in air for 2 hours under conditions with an impregnated support temperature of 120 degrees C, to obtain catalyst A. The physical properties and chemical composition of catalyst A are shown in Table 1.

**Example 2**

Catalyst B was prepared by the same method as Example 1, except that the organic additives citric acid monohydrate and polyethylene glycol (average molecular weight: 200) in Example 1 were used at 0.05 mole each to the total number of moles of molybdenum and cobalt. The physical properties and chemical composition of catalyst B are shown in Table 1.

**Example 3**

Catalyst C was prepared by the same method as Example 1, except that the amount of magnesium carbonate added was 0.8 mass% as magnesium oxide based on the oxide catalyst. The physical properties and chemical composition of catalyst C are shown in Table 1.

**Example 4**

Catalyst D was prepared by the same method as Example 1, except that calcium carbonate was used instead of magnesium carbonate. The physical properties and chemical composition of catalyst D are shown in Table 1.

**Example 5**

After placing silica sol and pseudoboehmite powder in a kneader (silica/alumina mass ratio: 8.5/91.5), loading in magnesium carbonate (0.5 mass% of magnesium oxide based on the oxide catalyst), ion-exchanged water and citric acid and kneading, the mixture was subjected to hot kneading to adjust the water content, and then the mixture was subjected to extrusion molding and calcined in air at 780 degrees C for 1.5 hours to obtain a silica-alumina-magnesia support. The support was impregnated with an aqueous solution containing molybdenum trioxide, basic nickel carbonate and phosphoric acid to 22 mass% of molybdenum trioxide, 4 mass% of nickel oxide and 5 mass% of phosphorus oxide based on the oxide catalyst, with diethylene glycol as an organic additive (the organic additive being added at 0.4 mol to the total number of moles of molybdenum and nickel), and hot air drying treatment was carried out in air for 2 hours under conditions with an impregnated support temperature of 120 degrees C, to obtain catalyst E. The physical properties and chemical composition of catalyst E are shown in Table 1.

(Comparative Example 1)

Aluminum sulfate and sodium aluminate were added to a tank containing warm tap water and mixed to prepare an alumina hydrate. The hydrate was separated from the solution and warm water was used for cleaning removal of the impurities, after which nitric acid was added, and then a kneader was used for hot kneading to adjust the water content, following which the mixture was subjected to extrusion molding and calcined in air at 680 degrees C for 1.5 hours to obtain an alumina support. The support was impregnated with an aqueous solution containing molybdenum trioxide, basic cobalt carbonate and phosphoric acid to 22 mass% of molybdenum trioxide, 4 mass% of cobalt oxide and 3 mass% of phosphorus oxide based on the oxide catalyst, with citric acid monohydrate and polyethylene glycol (average molecular weight: 200) as organic additives, (the organic additives being added at 0.1 mol and 0.3 mol of citric acid monohydrate and polyethylene glycol, respectively, to the total number of moles of molybdenum and cobalt), and hot air drying treatment was carried out in air for 2 hours under conditions with an impregnated support temperature of 120 degrees C, to obtain catalyst F. The physical properties and chemical composition of catalyst F are shown in Table 1.

(Comparative Example 2)

Catalyst G was prepared by the same method as Example 1, except that the magnesium carbonate in Example 1 was not used, and the extruded article of silica-alumina hydrate was calcined at 890 degrees C. The physical properties and chemical composition of catalyst G are shown in Table 1.

(Comparative Example 3)

Catalyst H was prepared by the same method as Example 1, except that the amount of magnesium carbonate added in Example 1 was 2.1 mass%. The physical properties and chemical composition of catalyst H are shown in Table 1.

(Comparative Example 4)

Pseudoboehmite powder, ion-exchanged water and nitric acid were loaded into the kneader and thoroughly kneaded and then hot kneaded to adjust the water content, after which the mixture was subjected to extrusion molding and calcined in air at 680 degrees C for 1.5 hours to obtain an alumina support. The support was impregnated with an aqueous solution containing molybdenum trioxide, basic nickel carbonate and phosphoric acid to 22 mass% of molybdenum trioxide, 4 mass% of nickel oxide and 5 mass% of phosphorus oxide based on the oxide catalyst, with diethylene glycol as an organic additive (the organic additive being added at 0.4 mol to the total number of moles of molybdenum and nickel), and hot air drying treatment was carried out in air for 2 hours under conditions with an impregnated support temperature of 120 degrees C, to obtain catalyst I. The physical properties and chemical composition of catalyst I are shown in Table 1.

[Table 1]

Table 1 Properties of prepared catalysts

| | | Example 1 | Example 2 | Example 3 | Example 4 | Example 5 | Comp. Ex. 1 | Comp. Ex. 2 | Comp. Ex. 3 | Comp. Ex. 4 |
|---|---|---|---|---|---|---|---|---|---|---|
| | | Catalyst A | Catalyst B | Catalyst C | Catalyst D | Catalyst E | Catalyst F | Catalyst G | Catalyst H | Catalyst I |
| $MoO_3$ | mass% | 22.2 | 22.1 | 22.0 | 22.0 | 22.1 | 22.1 | 22.1 | 22.1 | 22.2 |
| CoO | mass% | 4.1 | 4.0 | 4.2 | 4.0 | - | 4.0 | 4.0 | 4.0 | - |
| NiO | mass% | - | | - | - | 3.9 | - | - | - | 4.1 |
| $P_2O_5$ | mass% | 3.0 | 3.0 | 3.1 | 3.0 | 5.0 | 3.0 | 3.0 | 3.0 | 5.1 |
| $SiO_2$ | mass% | 6.1 | 6.0 | 6.0 | 5.9 | 6.0 | - | 6.1 | 6.1 | - |
| MgO | mass% | 0.5 | 0.5 | 0.8 | - | 0.5 | - | - | 2.1 | - |
| CaO | mass% | - | - | - | 0.5 | - | - | - | - | - |
| $Al_2O_3$ | mass% | Balance | Balance | Balance | Balance | Balance | Balance | Balance | Balance | Balance |
| Mass reduction ratio | mass% | 14.7 | 5.6 | 14.3 | 14.4 | 14.3 | 14.5 | 14.2 | 14.6 | 14.5 |
| Total pore volume | ml/g | 0.42 | 0.42 | 0.43 | 0.43 | 0.37 | 0.44 | 0.38 | 0.43 | 0.34 |
| Mean pore diameter | nm | 13.8 | 13.9 | 14.0 | 12.4 | 14.0 | 12.1 | 11.4 | 14.2 | 13.8 |
| Specific surface area | $m^2/g$ | 136 | 133 | 132 | 145 | 116 | 176 | 122 | 124 | 122 |
| Pore volume ratio[1] | % | 33 | 33 | 35 | 42 | 56 | 68 | 70 | 18 | 43 |
| 1) The ratio of volume of pores with mean pore diameter of $\pm 1.5$ nm with respect to total pore volume was determined. | | | | | | | | | | |

The test results are shown in Table 6.

(Hydrogenation activity test)

1. Gas oil hydrotreating test

After packing each of the catalysts of Examples 1 to 4 and Comparative Examples 1 to 3 into a fixed bed miniflow reactor, it was subjected to pre-sulfurization with a sulfurized oil obtained by adding dimethyl disulfide to each of the gas oil listed in Table 2 (corresponding to 2.5 mass% as the total sulfur content), and then it was switched to the feedstock listed in Table 2, and hydrotreating testing was conducted under the conditions listed in Table 3. The sulfur content of each product oil obtained by the test was measured by the fluorescent X-ray method and the specific activity per volume was determined based on formulas (1) and (2). The test results are shown in Table 6.

[Table 2]

Table 2 Gas oil properties

| Sulfur | mass% | 1.20 |
|---|---|---|
| Nitrogen | ppm | 109 |
| Density | g/cm$^3$@15°C | 0.8415 |
| Distillation properties$^{*)}$ IBP 50% 90% FBP | °C °C °C °C | 180 275 347 380 |
| *) According to method of ASTM D-2887 | | |

[Table 3]

Table 3 Activity test conditions 1

| Hydrogen partial pressure | MPa | 5.0 |
|---|---|---|
| Reaction temperature | °C | 340 |
| Hydrogen/oil ratio | Nl/l | 200 |
| LHSV | h$^{-1}$ | 1.5 |
| Period | H | 250 |

**Formula 1**

Specific activity = (k of Examples 1 to 4, Comparative Examples 1 to 3/ k of Comparative Example 1) × 100    formula (1)

Hydrodesulfurization reaction: $k = LHSV/(n-1) \times \{1/Y^{(n-1)} - 1/X^{(n-1)}\}$    formula (2)

$(n \neq 1)$

In the formula, LHSV is the liquid hourly space velocity, k is the reaction rate constant, n is the reaction order, X is the sulfur mass ratio in the feedstock and Y is the sulfur mass ratio in the product oil.

2. Vacuum gas oil hydrotreating test

After packing each of the catalysts of Example 5 and Comparative Example 4 into a fixed bed miniflow reactor, it was subjected to pre-sulfurization with a sulfurized oil obtained by adding dimethyl disulfide to the gas oil in Table 2 (corresponding to 2.5 mass% as the total sulfur content), and then it was switched to the feedstock listed in Table 4 and vacuum gas oil hydrotreating testing was conducted under the conditions listed in Table 5. The sulfur content of each product oil obtained by the test was measured by the fluorescent X-ray method, the nitrogen content was measured by oxidative decomposition chemiluminescence, and the specific activity per volume was determined based on formulas (3) to (5). The evaluation results are shown in Table 7.

[Table 4]

Table 4 Vacuum gas oil properties

| Sulfur | mass% | 1.91 |
|---|---|---|
| Nitrogen | ppm | 781 |
| Vanadium | ppm | <1 |
| Nickel | ppm | <1 |
| Residual carbon | mass% | 0.86 |
| Kinematic viscosity | cSt@50°C | 39.9 |
| Density | g/cm$^3$@15°C | 0.9168 |
| Distillation properties*) | | |
| IBP | °C | 311 |
| 50% | °C | 449 |
| 90% | °C | 535 |
| FBP | °C | 572 |
| *) Based on extension of ASTM D-2887 method | | |

[Table 5]

Table 5 Activity test conditions 2

| Hydrogen partial pressure | MPa | 6.0 |
|---|---|---|
| Reaction temperature | °C | 375 |
| Hydrogen/oil ratio | Nl/l | 1000 |
| LHSV | h$^{-1}$ | 1.0 |
| Period | H | 120 |

**Formula 2**

$$\text{Specific activity} = (k \text{ of Example 4 and Comparative Example 4})/k \text{ of Comparative Example 4}) \times 100 \quad \text{formula (3)}$$

$$\text{Hydrodesulfurization reaction: } k = LHSV/(n-1) \times \{1/Y^{(n-1)} - 1/X^{(n-1)}\} \quad \text{formula (4)}$$

$$(n \neq 1)$$

$$\text{Hydrodenitrification reaction: } k = LHSV \times ln(X/Y) \quad \text{formula (5)}$$

$$(n = 1)$$

In the formula, LHSV is the liquid hourly space velocity, k is the reaction rate constant, n is the reaction order, X is the sulfur or nitrogen mass ratio of the feedstock and Y is the sulfur or nitrogen mass ratio of the product oil. The denotation "ln" is the natural logarithm.

[Table 6]

| | Example 1 Catalyst A | Example 2 Catalyst B | Example 3 Catalyst C | Example 4 Catalyst D | Comp. Ex. 1 Catalyst F | Comp. Ex. 2 Catalyst G | Comp. Ex. 3 Catalyst H |
|---|---|---|---|---|---|---|---|
| Desulfurization specific activity | 122 | 116 | 118 | 114 | 100 | 120 | 82 |
| Energy consumption index | 110 | 110 | 110 | 110 | 100 | 160 | 110 |
| Desulfurization reaction order: 1.3rd order | | | | | | | |

The energy consumption indexes in Table 6 are based on 100 as the ratio of the numerical values of Examples 1 to 4 and Comparative Examples 1 to 3 with respect to the numerical value of Comparative Example 1, with conversion of the fuel required for preparation of the catalyst and the electric energy to heat.

[Table 7]

Table 7 Vacuum gas oil test results

| | Example 5 Catalyst E | Comp. Ex. 4 Catalyst I |
|---|---|---|
| Desulfurization specific activity | 104 | 100 |
| Denitrification specific activity | 106 | 100 |
| Energy consumption index | 110 | 100 |
| Desulfurization reaction order: 1.3rd order<br>Denitrification reaction order: First order | | |

The energy consumption indexes in Table 7 are based on 100 as the ratio of the numerical values of Comparative Example 4 and Example 5 with respect to the numerical value of Comparative Example 4, with conversion of the fuel required for preparation of the catalyst and the electric energy to heat.

The hydrotreating test results for the gas oil and vacuum gas oil (Tables 7 and 8) show that hydrotreating catalysts using silica-alumina-Group 2 metal oxide supports according to the invention exhibited superior hydrodesulfurization and hydrodenitrification activity compared to catalysts employing conventional alumina-based supports.

The catalyst of Comparative Example 2 employed a silica-alumina support that did not contain a metal of Group 2 of the Periodic Table, but its gas oil desulfurization activity was roughly equivalent to the examples. However, a high calcining temperature is necessary in the support-production process in order to obtain a catalyst with the same pore structure as the example catalysts, and this is disadvantageous as the relative energy costs increase for commercial production.

The catalyst of the present invention has higher catalytic activity than the prior art, and is also a highly economical catalyst that minimizes energy consumption for its production.

**Claims**

1.  A hydrotreating catalyst for hydrocarbon oils having at least one metal selected from among metals of Group 6 of the Periodic Table, at least one metal selected from among metals of Groups 8 to 10 of the Periodic Table, and an organic additive, supported on an inorganic porous carrier comprising at least one metal selected from among metals of Group 2 of the Periodic Table, in addition to alumina and silica, wherein the content of at least one metal selected from among metals of Group 2 of the Periodic Table is 0.3 to 2 mass% of the oxide catalysts, the silica content is 3 to 12 mass% of the oxide catalysts, the mean pore diameter by mercury porosimetry is 9 to 20 nm, the specific BET surface area is 100 to 170 $m^2/g$, and the total pore volume by mercury porosimetry is 0.3 to 0.6 ml/g as determined after treatment in air at 450 degrees C for 1 hour; wherein the organic additive is a water soluble organic compound selected from the group consisting of polyhydric alcohols and their ethers, esters of polyhydric alcohols or ethers, saccharides, carboxylic acids and their salts, amino acids and their salts and chelating agents.

2.  The hydrotreating catalyst according to claim 1, wherein the content of organic additives is 0.05 to 3 times the total number of moles of elements of Group 6 of the Periodic Table and elements of Groups 8 to 10 of the Periodic Table.

3.  The hydrotreating catalyst according to any one of claims 1 to 2, wherein the metal of Group 2 of the Periodic Table is magnesium or calcium, the metal of Group 6 of the Periodic Table is molybdenum or tungsten, and the metal of Groups 8 to 10 of the Periodic Table is cobalt and/or nickel.

4.  The hydrotreating catalyst according to any one of claims 1 to 3, wherein phosphoric acid as a catalyst component is supported at 0.5 to 15 mass% as phosphorus oxides of the oxide catalysts as determined after treatment in air at 450 degrees C for 1 hour.

5.  A method for producing a hydrotreating catalyst for hydrocarbon oils according to any one of claims 1 to 4, comprising impregnating an inorganic porous carrier obtained by calcin-in a hydrate containing at least one metal selected from among metals of Group 2 of the Periodic Table, in addition to alumina and silica, at 730 degrees C to 860 degrees for 0.1 to 3 hours, with an impregnating solution containing at least one metal selected from among metals of Group 6 of the Periodic Table, at least one metal selected from among metals of Groups 8 to 10 of the Periodic Table and the organic additive, and drying under conditions such that the organic additive remains on the catalyst at a weight reduction proportion of 3 to 60 mass%; as determined when the complete catalyst has been heated in air at 550 degrees C for 1 hour.

6.  The method for producing a hydrotreating catalyst according to claim 5, wherein the metal of Group 2 of the Periodic Table is magnesium or calcium, the metal of Group 6 of the Periodic Table is molybdenum or tungsten, and the metal of Groups 8 to 10 of the Periodic Table is cobalt and/or nickel.

7.  A hydrotreating process for a hydrocarbon oil, comprising contacting a hydrocarbon oil with a hydrotreating catalyst according to any one of claims 1 to 4 under conditions with a reaction temperature of 300 degrees C to 450 degrees C, a hydrogen partial pressure of 1-20 MPa, a liquid hourly space velocity of 0.1-10 $hr^{-1}$ and a hydrogen/oil ratio of 50 to 1,200 $Nm^3/kl$.

8.  The hydrotreating process according to claim 7, wherein the hydrocarbon oil is a distilled oil selected from the group consisting of petroleum-based naphtha, straight-run kerosene, straight-run gas oil, heavy gas oil, vacuum gas oil and heavy vacuum gas oil, wherein the metal content for vanadium or nickel in the feedstock to be treated is no greater than 5 ppm by weight and the carbon residue content is not greater than 1 mass %.

**EP 3 116 647 B1**

**Patentansprüche**

1. Hydrotreating-Katalysator für Kohlenwasserstofföle mit mindestens einem Metall, welches unter Metallen der Gruppe 6 des Periodensystems ausgewählt ist, mindestens einem Metall, welches unter Metallen der Gruppen 8 bis 10 des Periodensystems ausgewählt ist, und einem organischen Additiv, getragen auf einem anorganischen porösen Träger, umfassend mindestens ein Metall, welches unter Metallen der Gruppe 2 des Periodensystems ausgewählt ist, zusätzlich zu Aluminiumoxid und Siliciumdioxid, wobei der Gehalt von dem mindestens einen Metall, welches unter Metallen der Gruppe 2 des Periodensystems ausgewählt ist, 0,3 bis 2 Masse-% von den Oxidkatalysatoren beträgt, der Siliciumdioxid-Gehalt 3 bis 12 Masse-% von den Oxidkatalysatoren beträgt, der mittlere Porendurchmesser nach Quecksilber-Porosimetrie 9 bis 20 nm beträgt, die spezifische BET-Oberfläche 100 bis 170 m$^2$/g beträgt und das Porengesamtvolumen nach Quecksilber-Porosimetrie 0,3 bis 0,6 ml/g beträgt, wie nach Behandlung in Luft bei 450 Grad C 1 Stunde lang bestimmt; wobei das organische Additiv eine wasserlösliche organische Verbindung ist, welche aus der Gruppe ausgewählt ist, die aus mehrwertigen Alkoholen und ihren Ethern, Estern von mehrwertigen Alkoholen oder Ethern, Sacchariden, Carbonsäuren und ihren Salzen, Aminosäuren und ihren Salzen und chelatbildenden Mitteln besteht.

2. Hydrotreating-Katalysator gemäß Anspruch 1, wobei der Gehalt an organischen Additiven das 0,05- bis 3-fache der Gesamtmolzahl von Elementen der Gruppe 6 des Periodensystems und Elementen der Gruppen 8 bis 10 des Periodensystems beträgt.

3. Hydrotreating-Katalysator gemäß einem der Ansprüche 1 bis 2, wobei das Metall der Gruppe 2 des Periodensystems Magnesium oder Calcium ist, das Metall der Gruppe 6 des Periodensystems Molybdän oder Wolfram ist und das Metall der Gruppen 8 bis 10 des Periodensystems Cobalt und/oder Nickel ist.

4. Hydrotreating-Katalysator gemäß einem der Ansprüche 1 bis 3, wobei Phosphorsäure als eine Katalysatorkomponente in 0,5 bis 15 Masse-% als Phosphoroxide von den Oxidkatalysatoren, wie nach Behandlung in Luft bei 450 Grad C 1 Stunde lang bestimmt, getragen wird.

5. Verfahren zum Herstellen eines Hydrotreating-Katalysators für Kohlenwasserstofföle gemäß einem der Ansprüche 1 bis 4, umfassend Imprägnieren eines anorganischen porösen Trägers, erhalten durch Kalzinieren eines Hydrats, enthaltend mindestens ein Metall, das unter Metallen der Gruppe 2 des Periodensystems ausgewählt ist, zusätzlich zu Aluminiumoxid und Siliciumdioxid, bei 730 Grad C bis 860 Grad 0,1 bis 3 Stunden lang, mit einer Imprägnierungslösung, enthaltend mindestens ein Metall, welches unter Metallen der Gruppe 6 des Periodensystems ausgewählt ist, mindestens ein Metall, welches unter Metallen der Gruppen 8 bis 10 des Periodensystems ausgewählt ist, und das organische Additiv, und Trocknen unter Bedingungen, so dass das organische Additiv auf dem Katalysator verbleibt, bei einem Gewichtsverringerungsanteil von 3 bis 60 Masse-%; wie bestimmt, als der vollständige Katalysator in Luft bei 550 Grad C 1 Stunde lang erwärmt wurde.

6. Verfahren zum Herstellen eines Hydrotreating-Katalysators gemäß Anspruch 5, wobei das Metall der Gruppe 2 des Periodensystems Magnesium oder Calcium ist, das Metall der Gruppe 6 des Periodensystems Molybdän oder Wolfram ist und das Metall der Gruppen 8 bis 10 des Periodensystems Cobalt und/oder Nickel ist.

7. Hydrotreating-Verfahren für ein Kohlenwasserstofföl, umfassend Inkontaktbringen eines Kohlenwasserstofföls mit einem Hydrotreating-Katalysator gemäß einem der Ansprüche 1 bis 4 unter Bedingungen mit einer Reaktionstemperatur von 300 Grad C bis 450 Grad C, einem Wasserstoffpartialdruck von 1-20 MPa, einer Flüssigkeit-Stundenraumgeschwindigkeit von 0,1-10 h$^{-1}$ und einem Wasserstoff/Öl-Verhältnis von 50 bis 1.200 Nm$^3$/kl.

8. Hydrotreating-Verfahren gemäß Anspruch 7, wobei das Kohlenwasserstofföl ein destilliertes Öl ist, welches aus der Gruppe ausgewählt ist, die aus Naphtha auf Erdöl-Basis, Straightrun-Kerosin, Straightrun-Gasöl, schwerem Gasöl, Vakuumgasöl und schwerem Vakuumgasöl besteht, wobei der Metallgehalt für Vanadium oder Nickel in dem zu behandelnden Rohsubstrat nicht höher als 5 Gewichts-ppm ist und der Kohlenstoffrückstandgehalt nicht höher als 1 Masse-% ist.

**Revendications**

1. Catalyseur d'hydrotraitement pour huiles hydrocarbonées ayant au moins un métal choisi parmi les métaux du Groupe 6 du Tableau Périodique, au moins un métal choisi parmi les métaux des Groupes 8 à 10 du Tableau Périodique, et un additif organique, supportés sur un support poreux inorganique comprenant au moins un métal choisi parmi les métaux du Groupe 2 du Tableau Périodique, en plus de l'alumine et de la silice, dans lequel la teneur en au moins un métal choisi parmi les métaux du Groupe 2 du Tableau Périodique est de 0,3 à 2 % en masse des catalyseurs de type oxyde, la teneur en silice est de 3 à 12 % en masse des catalyseurs de type oxyde, le diamètre de pore moyen par porosimétrie au mercure est de 9 à 20 nm, la surface spécifique BET est de 100 à 170 $m^2$/g, et le volume de pore total par porosimétrie au mercure est de 0,3 à 0,6 ml/g, comme déterminé après traitement dans de l'air à 450°C pendant 1 heure ; et dans lequel l'additif organique est un composé organique soluble dans l'eau choisi dans l'ensemble constitué par les alcools polyvalents et leurs éthers, les esters ou éthers d'alcools polyvalents, les saccharides, les acides carboxyliques et leurs sels, les acides aminés et leurs sels, et les agents chélatants.

2. Catalyseur d'hydrotraitement selon la revendication 1, dans lequel la teneur en additifs organiques est de 0,05 à 3 fois le nombre total de moles d'éléments du Groupe 6 du Tableau Périodique et d'éléments des Groupes 8 à 10 du Tableau Périodique.

3. Catalyseur d'hydrotraitement selon l'une quelconque des revendications 1 et 2, dans lequel le métal du Groupe 2 du Tableau Périodique est le magnésium ou le calcium, le métal du Groupe 6 du Tableau Périodique est le molybdène ou le tungstène, et le métal des Groupes 8 à 10 du Tableau Périodique est le cobalt et/ou le nickel.

4. Catalyseur d'hydrotraitement selon l'une quelconque des revendications 1 à 3, dans lequel de l'acide phosphorique servant de composant catalyseur est supporté à raison de 0,5 à 15 % en masse sous forme d'oxydes de phosphore des catalyseurs de type oxyde, comme déterminé après traitement dans de l'air à 450°C pendant 1 heure.

5. Méthode pour produire un catalyseur d'hydrotraitement pour huiles hydrocarbonées selon l'une quelconque des revendications 1 à 4, comprenant l'imprégnation d'un support poreux inorganique, obtenu par calcination d'un hydrate contenant au moins un métal choisi parmi les métaux du Groupe 2 du Tableau Périodique, en plus de l'alumine et de la silice, à une température de 730°C à 860°C pendant 0,1 à 3 heures, avec une solution d'imprégnation contenant au moins un métal choisi parmi les métaux du Groupe 6 du Tableau Périodique, au moins un métal choisi parmi les métaux des Groupes 8 à 10 du Tableau Périodique, et l'additif organique, et le séchage dans des conditions telles que l'additif organique reste sur le catalyseur avec une proportion de réduction de poids de 3 à 60 % en masse ; comme déterminé quand le catalyseur complet a été chauffé dans de l'air à 550°C pendant 1 heure.

6. Méthode pour produire un catalyseur d'hydrotraitement selon la revendication 5, dans lequel le métal du Groupe 2 du Tableau Périodique est le magnésium ou le calcium, le métal du Groupe 6 du Tableau Périodique est le molybdène ou le tungstène, et le métal des Groupes 8 à 10 du Tableau Périodique est le cobalt et/ou le nickel.

7. Procédé d'hydrotraitement pour une huile hydrocarbonée, comprenant la mise en contact d'une huile hydrocarbonée avec un catalyseur d'hydrotraitement selon l'une quelconque des revendications 1 à 4 dans des conditions de température réactionnelle de 300°C à 450°C, de pression partielle d'hydrogène de 1 à 20 MPa, de vitesse spatiale horaire de liquide de 0,1 à 10 $h^{-1}$, et de rapport hydrogène/huile de 50 à 1200 $Nm^3$/kl.

8. Procédé d'hydrotraitement selon la revendication 7, dans lequel l'huile hydrocarbonée est une huile distillée choisie dans le groupe constitué par le naphta à base de pétrole, le kérosène de distillation directe, le gazole de distillation directe, le gazole lourd, le gazole sous vide et le gazole sous vide lourd, dans lequel la teneur en métal pour le vanadium ou le nickel dans la charge devant être traitée n'est pas supérieure à 5 ppm en poids et la teneur en résidus carbonés n'est pas supérieure à 1 % en masse.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000005601 A
- JP 2000313890 A
- JP 2001310133 A
- JP 2012532212 A